# FASCICULE DE BREVET EUROPEEN

(11) **EP 2 774 202 B1**
(45) Date de publication et mention de la délivrance du brevet: **12.08.2015**
(21) Numéro de dépôt: 12794423.9
(22) Date de dépôt: 31.10.2012
(51) Int. Cl.: H01M 8/04, H01M 8/12

(54) **PILE A COMBUSTIBLE A CATHODE POURVUE DE CANAUX**
BRENNSTOFFZELLE MIT EINER KATHODE MIT KANÄLEN
FUEL CELL INCLUDING A CATHODE HAVING CHANNELS

(30) Priorité: 03.11.2011 FR 1159969
(43) Date de publication de la demande: 10.09.2014
(73) Titulaire: Association Pour La Recherche Et Le Développement De Méthodes Et Processus Industriels "Armines", 75272 Paris Cedex 06 (FR)
(72) Inventeur: STOYNOV, Zdravko, Borissov, 1113 Sofia (BG); VLADIKOVA, Daria, Evgenieva, 1172 Sofia (BG); THOREL, Alain, F-91770 Saint-vrain (FR); CHESNAUD, Anthony, F-91090 Lisses (FR); VIVIANI, Massimo, I-16014 Campomorone (IT); BARBUCCI, Antonio, I-16129 Genova (IT)
(74) Mandataire: Gilbey, Vincent
(86) Numéro de dépôt international: PCT/FR2012/052529
(87) Numéro de publication internationale: WO 2013/064783

(56) Documents cités:
- US-A1- 2008 213 639
- WENPING SUN ET AL: "Optimization of BaZrCeYO-based proton-conducting solid oxide fuel cells with a cobalt-free proton-blocking LaSrFeOCeSmOcomposite cathode", INTERNATIONAL JOURNAL OF HYDROGEN ENERGY, ELSEVIER SCIENCE PUBLISHERS B.V., BARKING, GB, vol. 36, no. 16, 29 avril 2011 (2011-04-29), pages 9956-9966, XP028248294, ISSN: 0360-3199, DOI: 10.1016/J.IJHYDENE.2011.04.222 [extrait le 2011-05-10]
- G. TAILLADES ET AL: "Intermediate Temperature Anode-Supported Fuel Cell Based on BaCe 0.9 Y 0.1 O 3 Electrolyte with Novel Pr 2 NiO 4 Cathode", FUEL CELLS, 1 octobre 2009 (2009-10-01), pages NA-NA, XP055010672, ISSN: 1615-6846, DOI: 10.1002/fuce.200900033

## Description

La présente invention concerne le domaine des piles à combustible.

En particulier, la présente invention concerne une pile à combustible comprenant
- une anode apte à oxyder un premier composé M1 en premiers ions M^{(m+)} avec m entier non-nul,
- un premier électrolyte qui est en contact avec ladite anode,
- une cathode apte à réduire un second composé N2 en seconds ions N⁽ⁿ⁻⁾ avec n entier non-nul,
- une membrane centrale poreuse dont une des faces est en contact avec ledit premier électrolyte, et dont la face opposée est en contact avec ladite cathode,
le premier électrolyte étant constitué d'un matériau apte à conduire les ions M^{(m+)}, la membrane centrale étant constituée d'un matériau apte à conduire à la fois les ions M^{(m+)} et les ions N⁽ⁿ⁻⁾.

Les piles à combustible (PAC) sont amenées à devenir une source de production d'énergie alternative à celles provenant directement des ressources fossiles, pour les applications stationnaires, mais aussi pour les applications embarquées (par exemple l'automobile) à plus long terme.

Une PAC fonctionne sur le principe d'une oxydo-réduction électrochimique et contrôlée d'un premier composé M1 et d'un second composé N2, avec production simultanée d'électricité, du composé P et de chaleur, selon la réaction chimique globale

{n M1 + m N2 → p P}

avec n, m, et p entiers non-nuls.
M1 désigne un composé d'atomes identiques ou distincts qui, en s'oxydant, donne un premier ion M^{(m+)} (ou m premiers ions M⁺) et m électrons.
N2 désigne un composé d'atomes identiques ou distincts qui, par réduction en présence de n électrons, donne un second ion N⁽ⁿ⁻⁾ (ou n seconds ions N⁻).

C'est cette électricité produite qui peut ensuite alimenter en énergie un dispositif.

Par exemple, la PAC est telle que le premier composé M1 est l'hydrogène (H₂) et le second composé N2 est l'oxygène (O₂), et la réaction chimique globale est

{H₂ + ½ O₂ → H₂O}.

Le composé produit de cette réaction est l'eau H₂O.

On considère ci-dessous l'exemple d'une telle PAC.

On connait les piles à combustible à oxyde solide, ou « Solid Oxyde Fuel Cell » (ci-après appelées « SOFC »), et les piles à combustible à conduction protonique, ou « Proton Conducting Fuel Cell » (ci-après appelées PCFC).

Dans une SOFC, l'eau est formée à l'anode, et évacuée par l'anode, ce qui entraîne une dilution indésirable du combustible (hydrogène) par l'eau au niveau de l'anode, ainsi qu'une diminution de l'activité catalytique, l'eau apparaissant sur les sites actifs de l'anode

Dans une PCFC, l'eau est formée à la cathode, et évacuée par la cathode, ce qui entraîne une dilution indésirable de l'oxygène par l'eau au niveau de la cathode, ainsi qu'une diminution de l'activité catalytique, l'eau apparaissant sur les sites actifs de la cathode.

Dans les deux cas, la performance de la pile à combustible est diminuée, et est insuffisante.

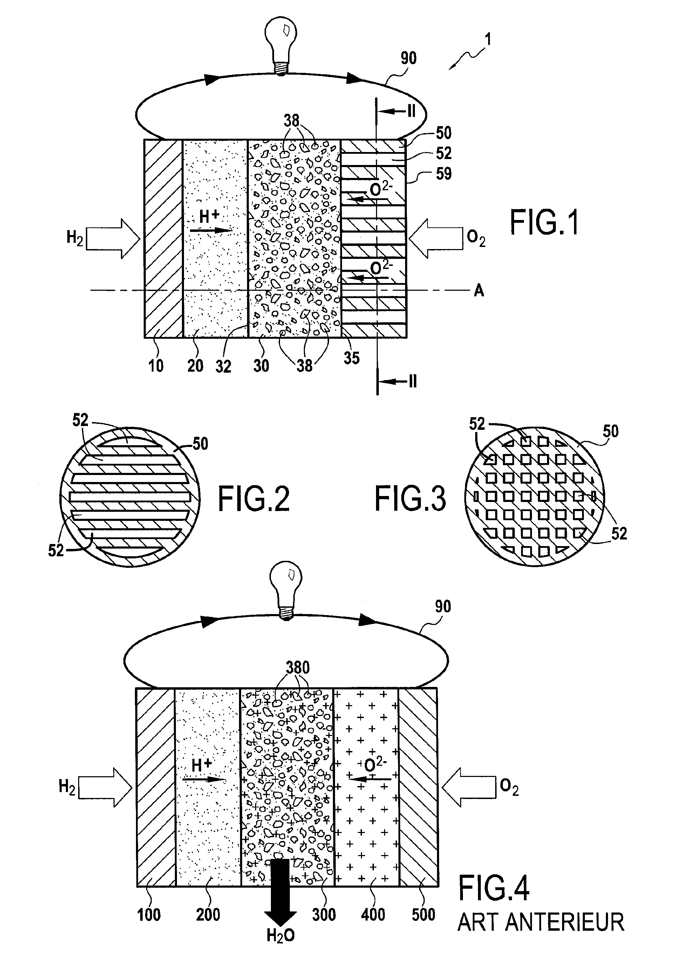

Pour résoudre ce problème, il a été élaboré une pile à combustible à membrane à conduction mixte. Le fonctionnement d'une telle pile à combustible est rappelé ci-après en référence à la figure 4, qui illustre une telle pile et qui constitue l'art antérieur.

Cette pile à combustible, représentée en coupe, comprend cinq couches principales qui sont deux à deux en contact et dont l'empilement selon un axe principal A est, dans cet ordre :
- Une anode 100,
- Un premier électrolyte 200,
- Une membrane centrale 300,
- Un second électrolyte 400,
- Une cathode 500.

L'anode 100 est le siège d'une réaction d'oxydation de l'hydrogène :

{H₂ → 2H⁺ + 2 e⁻}.

Les protons H⁺ ainsi créés migrent vers la membrane centrale 300 au travers du premier électrolyte 200. Ce premier électrolyte 200 est donc un matériau apte à conduire les protons H⁺.

Les électrons e⁻ produits circulent par l'extérieur de la pile à combustible depuis l'anode 100 au travers d'un conducteur 90 pour rejoindre la cathode 500 et l'alimenter en électrons (voir ci-dessous).

La cathode C est le siège d'une réaction de réduction de l'oxygène :

{½ O₂ + 2e⁻ → O²⁻}

Les ions O²⁻ ainsi créés migrent vers la membrane centrale 300 au travers du second électrolyte 400. Ce second électrolyte 400 est donc un matériau apte à conduire les ions O²⁻.

Ainsi une première face de la membrane centrale 300 est en contact avec le premier électrolyte 200, et une seconde face de la membrane centrale 300, opposée à cette première face, est en contact avec le second électrolyte 400.

La membrane centrale 300 est un composite du premier électrolyte 200 et du second électrolyte 400, de façon à être apte à conduire à la fois les protons H⁺ et les ions O²⁻.

Au sein de cette membrane centrale 300, ces protons H⁺ et ces ions O²⁻ réagissent selon la réaction suivante afin de produire de l'eau :

{2H⁺ +O²⁻ → H₂O}

Cette membrane centrale 300 est en outre poreuse avec des porosités 380, afin de permettre une meilleure évacuation de l'eau ainsi produite par cette couche centrale 300.

Une telle pile à combustible est présentée par exemple dans le document US 2008/0213639 et présente, par rapport aux piles à combustible à conduction simple (SOFC et PCFC), l'avantage que l'on évite la dilution du combustible au niveau de l'anode qui se produit dans une SOFC, et une dilution de l'oxygène au niveau de la cathode qui se produit dans une PCFC. On évide aussi la corrosion des inter-connecteurs et on limite les surtensions associées à la présence d'eau aux électrodes dans un pile standard de type SOFC et PCFC.

L'évacuation de l'eau (c'est-à-dire une évacuation qui ne réduise pas les performances de la pile à combustible) dans une telle pile à combustible à membrane à conduction mixte n'est cependant pas satisfaisante car cette évacuation est limitée par l'épaisseur et par les dimensions de la porosité de la membrane centrale de cette pile.

La présente invention vise à remédier à ces inconvénients.

L'invention vise à proposer une pile à combustible dans laquelle la densité de puissance est sensiblement supérieure à celle d'une pile à combustible à membrane à combustion mixte selon l'art antérieur, et dans laquelle le produit P (par exemple de l'eau) est évacué efficacement et sans dilution notable du composé M1 (par exemple de l'hydrogène) au niveau de l'anode ni de dilution notable du composé M2 (par exemple de l'oxygène) au niveau de la cathode.

Ce but est atteint grâce au fait que la cathode est traversée par un réseau de canaux qui débouchent chacun sur la membrane centrale et sur une surface libre de la cathode, la dimension minimale d'une section transversale d'un quelconque de ces canaux étant supérieure à 20 µm de telle sorte que l'évacuation du produit P résultant de la réaction des ions M^{(m+)} et des ions N⁽ⁿ⁻⁾ depuis la membrane centrale vers l'extérieur de la pile à combustible au travers de ces canaux est possible.

Grâce à ces dispositions, l'évacuation de l'eau s'effectue de façon plus efficace d'une part car le chemin d'évacuation de l'eau par les canaux est plus court, et d'autre part car l'eau est évacuée sur toute la surface des canaux, soit une surface plus grande que dans le cas de la pile à combustible à membrane à conduction mixte selon l'art antérieur où l'eau est évacuée uniquement par les faces de la membrane centrale qui sont perpendiculaires aux interfaces de la membrane centrale avec le premier ou le second électrolyte. La densité de puissance d'une pile selon l'invention est ainsi sensiblement augmentée.

Avantageusement, le premier électrolyte et la membrane centrale sont constitués du même matériau qui est apte à conduire à la fois les ions M^{(m+)} et les ions N⁽ⁿ⁻⁾.

Ainsi, la fabrication de la pile à combustible est grandement simplifiée, car l'ensemble constitué du premier électrolyte et de la membrane centrale peut être fabriqué en une seule opération, par exemple par frittage. La résistance mécanique et la durabilité de cet ensemble sont également améliorées.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 illustre schématiquement une pile à combustible selon l'invention,
- la figure 2 est une vue en coupe selon le plan II-II perpendiculaire à l'axe principal A de la cathode de la pile à combustible de la figure 1,
- la figure 3 est une vue en coupe d'un autre mode de réalisation de la cathode d'une pile à combustible selon l'invention,
- la figure 4 illustre schématiquement une pile à combustible selon l'art antérieur.

Une pile à combustible 1 selon l'invention est illustrée schématiquement sur la figure 1. Cette pile à combustible 1, représentée en coupe, comprend quatre couches principales qui sont deux à deux en contact et dont l'empilement selon un axe principal A est, dans cet ordre :
- Une anode 10,
- Un premier électrolyte 20,
- Une membrane centrale 30,
- Une cathode 50.

Dans la description ci-dessous, et en figure 1, on considère une PAC où le premier composé M1 est l'hydrogène H₂ apte à s'oxyder en ions H⁺, le second composé est l'oxygène O₂ apte à être réduit en ions O²⁻, et le produit P est l'eau H₂O.

Cependant, l'invention s'applique aussi à des réactions où le premier composé M1 n'est pas l'hydrogène et où le second composé M2 n'est pas l'oxygène.

L'anode 10 est le siège d'une réaction d'oxydation de l'hydrogène :

{H₂ → 2H⁺ + 2 e⁻}.

Les protons H⁺ ainsi créés migrent vers la membrane centrale 30 au travers du premier électrolyte 20. Ce premier électrolyte 20 est donc un matériau apte à conduire les protons H⁺.

Les électrons e⁻ produits circulent par l'extérieur de la pile à combustible depuis l'anode 10 au travers d'un conducteur 90 pour rejoindre la cathode 50 et l'alimenter en électrons (voir ci-dessous).

La cathode 50 est le siège d'une réaction de réduction de l'oxygène :

{½ O₂ + 2 e⁻ → O²⁻}

Les ions O²⁻ ainsi créés migrent vers la membrane centrale 30.

Ainsi une première face 32 de la membrane centrale 30 est en contact avec le premier électrolyte 20, et une seconde face 35 de la membrane centrale 30, opposée à cette première face 32, est en contact avec la cathode 50.

Le premier électrolyte 20 est constitué d'un matériau apte à conduire les protons H⁺ (ou plus généralement dans le cas où le premier composé est M1, les ions M^{(m+)}).

La membrane centrale 30 est constituée d'un matériau apte à conduire les protons H⁺ et apte à conduire les ions O²⁻ (ou plus généralement dans le cas où le premier composé est M1 et le second composé est M2, les ions M^{(m+)} et les ions N⁽ⁿ⁻⁾).

Au sein de cette membrane centrale 30, ces protons H⁺ et ces ions O²⁻ réagissent selon la réaction suivante afin de produire de l'eau (ou plus généralement dans le cas où le premier composé est M1 et le second composé est M2, produire un produit P) :

{2H⁺ + O²⁻ → H₂O}

Cette membrane centrale 30 est en outre poreuse avec des porosités 38, afin de permettre une meilleure évacuation vers la cathode 50 de l'eau ainsi produite par cette membrane centrale 30.

Avantageusement, le premier électrolyte 20 et la membrane centrale 30 sont constitués du même matériau qui est apte à conduire à la fois les protons H⁺ (ou, dans le cas général les ions M^{(m+)}) et les ions O²⁻ (ou, dans le cas général ions N⁽ⁿ⁻⁾).

La fabrication de la pile à combustible 1 est ainsi facilitée.

Par exemple, le matériau de la membrane centrale 30 (et du premier électrolyte 20) est une céramique, qui présente l'avantage d'un contrôle de sa porosité durant la fabrication de la pile à combustible 1, par exemple par frittage.

Les essais réalisés par les inventeurs ont montré qu'une telle céramique à conduction mixte utilisable comme matériau pour la pile à combustible 1 est par exemple un cérate de barium de formule BaCe_{0,85}Y_{0,15}O_{3-δ} avec δ positif.

Par exemple, δ est inférieur à 0,3.

Ce matériau est désigné par BCY15 et présente une bonne conduction à la fois des protons H⁺ et des ions O²⁻.

D'autres matériaux peuvent être utilisés, par exemple BaCe_{0.5}Zr_{0.35}Sc_{0.1}Zn_{0.05}O_{3-δ} ou BaCe_{0.9}Y_{0.1}Ru_{0.1}O_{3-δ} avec δ positif.

La cathode 50 présente en son sein, c'est-à-dire dans son volume, des canaux 52.

Chaque canal 52 débouche à une extrémité sur la membrane centrale 30, et à son autre extrémité sur une surface libre 59 de la cathode 50. Ces canaux 52 peuvent présenter une géométrie quelconque, et être en nombre quelconque.

Avantageusement, chaque canal 52 est rectiligne et s'étend selon l'axe principal A, c'est-à-dire perpendiculairement à la membrane centrale 30.

Chaque canal 52 est ainsi perpendiculaire à la seconde face 35 de la membrane centrale 30.

Cette géométrie permet une évacuation de l'eau plus rapide depuis cette seconde face 35 car les canaux ont alors une longueur minimisée.

Par exemple la cathode 50 présente des canaux 52 parallèles qui sont chacun séparés du ou des canaux qui lui sont adjacents par une bande 55 du matériau de la cathode 50, ces bandes 55 s'étendant selon l'axe principal A.

Par exemple, comme représenté sur la figure 2 qui est une coupe perpendiculairement à l'axe principal A de la cathode 50 de la pile à combustible 1 de la figure 1, la cathode 50 est un cylindre dont l'axe est l'axe principal A, de section circulaire. Chaque canal 52 a une forme sensiblement trapézoïdale, et est séparé du ou des canaux qui lui sont adjacents par une bande 55 du matériau de la cathode 50.

Alternativement, la cathode 50 présente des bandes 55 qui s'étendent selon l'axe principal A et se croisent pour former un réseau de canaux 52 parallèles entourés par ces bandes.

Par exemple, comme représenté sur la figure 2, les bandes 55 se divisent en deux groupes, chaque bande 55 étant parallèle aux bandes de son groupe et perpendiculaire aux bandes de l'autre groupe, de façon à former un réseau de canaux 52 parallèles chacun de section rectangulaire (sauf éventuellement à la périphérie de la cathode 50) et entouré par quatre bandes 55 (ou moins de quatre bandes si le canal se trouve à la périphérie de la cathode 50). Ce mode de réalisation de la cathode 50 est représenté sur la figure 3.

Alternativement, chacun de ces canaux 52 peut être de section circulaire.

Dans tous les cas, la taille minimale des canaux 52 est d'au moins 20 µm (avec 1 µm = 10⁻⁶ m).

Cette taille minimale des canaux permet un écoulement de l'eau.

La taille minimale des canaux 52 est supérieure à celle des pores de la cathode.

Les essais effectués par les inventeurs ont montré que la densité de puissance de la pile à combustible selon l'invention est sensiblement supérieure à la densité de puissance d'une pile à combustible à membrane à conduction mixte.

Les inventeurs ont réalisé une pile à combustible 1 selon l'invention comprenant plusieurs couches par combinaison des procédés suivants :
- La formation et l'assemblage du premier électrolyte 20 et de la membrane centrale 30 par une compression à froid et un frittage du matériau constituant ces couches,
- La fixation de l'anode 10 sur le premier électrolyte 20 et de la cathode 50 sur la membrane centrale 30 par un procédé de déposition, par exemple la sérigraphie ou le coulage en bande (en anglais "tape casting"),
- La densification du premier électrolyte 20 lors du frittage,
- L'ajustement de la porosité de la membrane centrale 30.

Ce procédé de fabrication permet de faciliter la fabrication d'une pile à combustible 1 selon l'invention.

La densification du premier électrolyte 20 peut être réalisée par l'ajout d'un agent de densification tel que ZnO ou CuO lors du frittage.

La porosité de la membrane centrale 30 peut être réalisée et/ou ajustée par l'ajout d'additifs favorisant la formation de pores lors du frittage, et/ou une température de frittage plus basse.

L'anode 10 et la cathode 50 sont par exemple une céramique ou un cermet (composite céramique-métal) qui sont fabriqués selon des procédés connus.

Par exemple, la composition d'une pile à combustible 1, où on utilise la notation {anode/ 1^{er} électrolyte/ membrane centrale/ cathode} est une des suivantes :
BCY15-Ni/ BCY15 dense/ BCY15 poreux/ BCY15-LSCF
   ou
BCY15-Ni/ BCY15 dense/ BCY15 poreux/ BCY15-Ag

Dans les compositions ci-dessus LSCF désigne la céramique de formule La_{1-X}Sr_{X}Co_{1-Y}Fe_{Y}O_{3-δ} avec X et Y compris entre 0 et 1, et δ positif.

Une pile à combustibles 1 selon l'invention peut par exemple fonctionner à une température supérieure à 400°C, ce qui augmente son efficacité.

L'invention a été décrite ci-dessus dans le cas de réactions chimiques où le premier composé M1 est l'hydrogène et où le second composé M2 est l'oxygène.

L'invention s'applique également à d'autres cas, par exemple les piles à combustible où le premier composé M1 est de l'éthanol, du méthane ou du méthanol.

En outre, la pile à combustible selon l'invention a été décrite ci-dessus dans le cas où elle fonctionne par oxydo-réduction électrochimique d'un premier composé M1 et d'un second composé N2 pour produire un composé P et de l'électricité. La pile à combustible selon l'invention est également apte à fonctionner de façon inverse, c'est-à-dire comme électrolyseur :
ainsi, on apporte le composé P dans la pile 1 grâce aux canaux 52 de la cathode 50, et on applique une différence de potentiel à la pile 1. Il se déclenche alors au sein de la pile 1 la réaction chimique globale

{p P → n M1 + m N2}

Les électrons du courant électrique résultant de cette différence de potentiel sont prélevés aux ions N⁽ⁿ⁻⁾ à la cathode 50 (qui fonctionne dans ce cas comme une anode) et parviennent à l'anode 10 (qui fonctionne dans ce cas comme une cathode) où ils se recombinent avec les ions M^{(m+)}.

Un tel électrolyseur est donc apte à produire les composés M1 et M2 par électrolyse du composé P. Dans le cas où le composé P est H₂O, l'électrolyseur produit de l'hydrogène H₂ et de l'oxygène O₂.

Cet électrolyseur, de par la structure en canaux de la cathode 50, permet un apport du composé P de façon plus efficace, et donc possède un meilleur rendement.

## Revendications

1. Pile à combustible (1) comprenant
- une anode (10) apte à oxyder un premier composé M1 en premiers ions M^{(m+)} avec m entier non-nul,
- un premier électrolyte (20) qui est en contact avec ladite anode (10),
- une cathode (50) apte à réduire un second composé N2 en second ions N⁽ⁿ⁻⁾ avec n entier non-nul,
- une membrane centrale (30) poreuse dont une des faces (32) est en contact avec ledit premier électrolyte (20), et dont la face opposée (35) est en contact avec ladite cathode (50),
ledit premier électrolyte (20) étant constitué d'un matériau apte à conduire les ions M^{(m+)}, ladite membrane centrale (30) étant constituée d'un matériau apte à conduire à la fois les ions M^{(m+)} et les ions N⁽ⁿ⁻⁾, ladite pile à combustible étant **caractérisée en ce que** ladite cathode (50) est traversée par un réseau de canaux (52) qui débouchent chacun sur ladite membrane centrale (30) et sur une surface libre de la cathode (50), la dimension minimale d'une section transversale d'un quelconque de ces canaux (52) étant supérieure à 20 µm de telle sorte que l'évacuation du produit P résultant de la réaction des ions M^{(m+)} et des ions N⁽ⁿ⁻⁾ depuis ladite membrane centrale (30) vers l'extérieur de la pile à combustible (1) au travers de ces canaux (52) est possible.

2. Pile à combustible selon la revendication 1 **caractérisée en ce que** ledit premier électrolyte (20) et ladite membrane centrale (30) sont constitués du même matériau qui est apte à conduire à la fois les ions M^{(m+)} et les ions N⁽ⁿ⁻⁾.

3. Pile à combustible selon la revendication 1 ou 2 **caractérisée en ce que** ledit premier composé est l'hydrogène H₂ apte à s'oxyder en ions H⁺, ledit second composé est l'oxygène O₂ apte à être réduit en ions O²⁻, ledit produit P est l'eau H₂O.

4. Pile à combustible (1) selon la revendication 2 ou 3 **caractérisée en ce que** ledit matériau constituant ladite membrane centrale (30) est une céramique.

5. Pile à combustible (1) selon la revendication 4 **caractérisée en ce que** ladite céramique est un cérate de barium de formule BaCe_{0,85}Y_{0,15}O_{3-δ} avec δ positif.

6. Pile à combustible (1) selon l'une quelconque des revendications 1 à 5 **caractérisée en ce que** chacun desdits canaux (52) est rectiligne et s'étend selon ledit axe principal A, c'est-à-dire perpendiculairement à ladite membrane centrale (30).

7. Pile à combustible (1) selon la revendication 6 **caractérisée en ce que** ladite cathode (50) présente des canaux (52) parallèles qui sont chacun séparés du ou des canaux qui lui sont adjacents par une bande (55) du matériau de la cathode (50), ces bandes (55) s'étendant selon l'axe principal A.

8. Pile à combustible (1) selon la revendication 6 **caractérisée en ce que** ladite cathode (50) présente des bandes (55) qui s'étendent selon l'axe principal A et se croisent pour former un réseau de canaux (52) parallèles entourés par ces bandes.

9. Pile à combustible (1) selon la revendication 8 **caractérisée en ce que** chacun desdits canaux (52) est de section rectangulaire.

10. Pile à combustible (1) selon la revendication 8 **caractérisée en ce que** chacun desdits canaux (52) est de section circulaire.

## Patentansprüche

1. Brennstoffzelle (1), umfassend:
- eine Anode (10), die geeignet ist, eine erste Verbindung M1 in erste Ionen M^{(m+)} zu oxidieren, wobei m eine ganze Zahl ungleich Null ist,
- ein erstes Elektrolyt (20), das mit der Anode (10) in Kontakt steht,
- eine Kathode (50), die geeignet ist, eine zweite Verbindung N2 in zweite Ionen N⁽ⁿ⁻⁾ zu reduzieren, wobei n eine ganze Zahl ungleich Null ist,
- eine zentrale poröse Membran (30), eine deren Seiten (32) mit dem ersten Elektrolyt (20) in Kontakt ist, und deren gegenüberliegende Seite (35) mit der Kathode (50) in Kontakt steht,
wobei das erste Elektrolyt (20) von einem Material gebildet ist, das geeignet ist, die Ionen M^{(m+)} zu leiten, wobei die zentrale Membran (30) von einem Material gebildet ist, das geeignet ist, sowohl die Ionen M^{(m+)} als auch die Ionen N⁽ⁿ⁻⁾ zu leiten, wobei die Brennstoffzelle **dadurch gekennzeichnet ist, dass** die Kathode (50) von einem Netz von Kanälen (52) durchquert wird, die jeweils auf der zentralen Membran (30) und auf der freien Fläche der Kathode (50) münden, wobei die Mindestabmessung eines Querschnitts eines dieser Kanäle (52) größer als 20 µm ist, so dass die Ableitung des Produktes P, das aus der Reaktion der Ionen M^{(m+)} und der Ionen N⁽ⁿ⁻⁾ stammt, von der zentralen Membran (30) zum Äußeren der Brennstoffzelle (1) durch diese Kanäle (52) möglich ist.

2. Brennstoffzelle nach Anspruch 1, **dadurch gekennzeichnet, dass** das erste Elektrolyt (20) und die zentrale Membran (30) aus demselben Material bestehen, das geeignet ist, sowohl die Ionen M^{(m+)} als auch die Ionen N⁽ⁿ⁻⁾ zu leiten.

3. Brennstoffzelle nach Anspruch 1 oder 2, **dadurch gekennzeichnet, dass** die erste Verbindung Wasserstoff H₂ ist, der geeignet ist, sich in Ionen H⁺ zu oxidieren, wobei die weite Verbindung Sauerstoff O₂ ist, der geeignet ist, zu Ionen O²⁻ reduziert zu werden, wobei das Produkt P Wasser H₂O ist.

4. Brennstoffzelle (1) nach Anspruch 2 oder 3, **dadurch gekennzeichnet, dass** das Material, aus dem die zentrale Membran (30) besteht, eine Keramik ist.

5. Brennstoffzelle (1) nach Anspruch 4, **dadurch gekennzeichnet, dass** die Keramik ein Bariumcerat mit der Formel BaCe_{0,85}Y_{0,15}O_{3-δ} ist, wobei ö positiv ist.

6. Brennstoffzelle (1) nach einem der Ansprüche 1 bis 5, **dadurch gekennzeichnet, dass** jeder der Kanäle (52) gerade ist und sich entlang der Hauptachse A, d.h. senkrecht auf die zentrale Membran (30), erstreckt.

7. Brennstoffzelle (1) nach Anspruch 6, **dadurch gekennzeichnet, dass** die Kathode (50) parallele Kanäle (52) aufweist, die jeweils von dem oder den Kanälen, die an sie angrenzen, durch ein Band (55) des Materials der Kathode (50) getrennt ist, wobei sich diese Bänder (55) entlang der Hauptachse A erstrecken.

8. Brennstoffzelle (1) nach Anspruch 6, **dadurch gekennzeichnet, dass** die Kathode (50) Bänder (55) aufweist, die sich entlang der Hauptachse A erstrecken und sich kreuzen, um ein Netz von parallelen Kanälen (52), die von diesen Bändern umgeben sind, zu bilden.

9. Brennstoffzelle (1) nach Anspruch 8, **dadurch gekennzeichnet, dass** jeder der Kanäle (52) einen rechteckigen Querschnitt hat.

10. Brennstoffzelle (1) nach Anspruch 8, **dadurch gekennzeichnet, dass** jeder der Kanäle (52) einen kreisförmigen Querschnitt hat.

## Claims

1. A fuel cell (1) comprising:
· an anode (10) suitable for oxidizing a first compound M1 into first ions M^{(m+)}, with m a nonzero integer;
· a first electrolyte (20) that is in contact with said anode (10);
· a cathode (50) suitable for reducing a second compound N2 into second ions N⁽ⁿ⁻⁾, with n a nonzero integer; and
· a porous central membrane (30) having one of its faces (32) in contact with said first electrolyte (20), and having its opposite face (35) in contact with said cathode (50);
said first electrolyte (20) being constituted by a material suitable for conducting the ions M^{(m+)}, said central membrane (30) being constituted by a material suitable for conducting both the ions M^{(m+)} and the ions N⁽ⁿ⁻⁾, said fuel cell being **characterized in that** said cathode (50) has an array of channels (52) passing therethrough, each channel opening out at said central membrane (30) and at a free surface of the cathode (50), the minimum dimension of a cross-section of any one of the channels (52) being greater than 20 µm, such that it is possible to discharge the product P resulting from the reaction of the ions M^{(m+)} and the ions N⁽ⁿ⁻⁾ from said central membrane (30) to the outside of the fuel cell (1) via said channels (52).

2. A fuel cell according to claim 1, **characterized in that** said first electrolyte (20) and said central membrane (30) are made of the same material that is suitable for conducting both the ions M^{(m+)} and the ions N⁽ⁿ⁻⁾.

3. A fuel cell according to claim 1 or claim 2, **characterized in that** said first compound is hydrogen H₂ suitable for oxidizing into H⁺ ions, said second compound is oxygen O₂ suitable for reducing into O²⁻ ions, and said product P is water H₂O.

4. A fuel cell (1) according to claim 2 or claim 3, **characterized in that** said material constituting said central membrane (30) is a ceramic.

5. A fuel cell (1) according to claim 4, **characterized in that** said ceramic is barium cerate having the formula BaCe_{0.85}Y_{0.15}O_{3-δ}, where δ is positive.

6. A fuel cell (1) according to any one of claims 1 to 5, **characterized in that** each of said channels (52) is rectilinear and extends along said main axis A, i.e. perpendicularly to said central membrane (30).

7. A fuel cell (1) according to claim 6, **characterized in that** said cathode (50) presents parallel channels (52), each separated from the adjacent channel(s) by a respective strip (55) of the material of the cathode (50), these strips (55) extending along the main axis A.

8. A fuel cell (1) according to claim 6, **characterized in that** said cathode (50) presents strips (55) that extend along the main axis A and cross one another to form an array of parallel channels (52) surrounded by the strips.

9. A fuel cell (1) according to claim 8, **characterized in that** each of said channels (52) is of rectangular section.

10. A fuel cell (1) according to claim 8, **characterized in that** each of said channels (52) is of circular section.
